Europäisches Patentamt

(19) European Patent Office

Office européen des brevets

(11) Numéro de publication : **0 042 334**
**B1**

(12) **FASCICULE DE BREVET EUROPÉEN**

(45) Date de publication du fascicule du brevet : **02.05.84**

(21) Numéro de dépôt : **81400932.0**

(22) Date de dépôt : **12.06.81**

(51) Int. Cl.³ : **B 60 L 5/28**, B 60 L 5/14

(54) **Pantographe rabattable en cas d'effort frontal anormal.**

(30) Priorité : **18.06.80 FR 8013487**

(43) Date de publication de la demande :
**23.12.81 Bulletin 81/51**

(45) Mention de la délivrance du brevet :
**02.05.84 Bulletin 84/18**

(84) Etats contractants désignés :
**BE CH DE IT LI NL SE**

(56) Documents cités :
**CH-A- 120 422**
**CH-A- 542 067**
**DE-A- 2 909 855**
**DE-C- 542 071**
**FR-A- 2 066 515**

(73) Titulaire : **FAIVELEY ENTREPRISES**
**93, rue du Docteur-Bauer**
**F-93404 Saint-Ouen Cedex (FR)**

(72) Inventeur : **Milleville, André**
**12 allée de Bretagne**
**F-95460 Ezanville (FR)**

(74) Mandataire : **Bouju, André**
**38 Avenue de la Grande Armée**
**F-75017 Paris (FR)**

EP 0 042 334 B1

Jouve, 18, rue St-Denis, 75001 Paris, France

## Pantographe rabattable en cas d'effort frontal anormal

La présente invention concerne un pantographe rabattable automatiquement en cas d'effort frontal anormal, ce pantographe comprenant un archet monté au sommet d'une structure mobile articulée à un châssis, au moins un ressort élévateur de la structure mobile, attaché à la structure mobile et au châssis, des moyens pour permettre un déplacement de l'archet indépendamment de la structure mobile, des moyens pour neutraliser le ressort élévateur, et des moyens de transmission pour relier les moyens de déplacement de l'archet aux moyens pour neutraliser le ressort élévateur.

Ces éléments sont connus d'après le brevet suisse 120 422. D'après ce brevet, l'archet, qui est déplaçable autour d'un axe, entraîne dans son déplacement une fourchette entre les bras de laquelle se trouve la bille sertie à l'extrémité d'un câble de commande qui fait partie des moyens de transmission.

En service normal, des ressorts antagonistes maintiennent l'archet en position sensiblement verticale. Toutefois certaines oscillations sont permises à l'archet, ces oscillations étant limitées de part et d'autre par le contact de l'un des bras de la fourchette avec la bille.

Si l'archet dépasse l'inclinaison correspondant au contact entre le bras de fourchette et la bille, alors la fourchette entraîne avec elle la bille qui tire sur le câble de commande. Ceci provoque la vidange du moteur hydraulique de compensation des ressorts abaisseurs. On assiste simultanément à la détente du ressort abaisseur qui, lorsqu'il n'est pas comprimé par le piston du moteur hydraulique, est plus fort que le ressort élévateur.

Ce pantographe connu présente de nombreux inconvénients :

Il est d'un type de moins en moins utilisé dans lequel l'archet jouit d'une certaine liberté d'inclinaison. En service, l'archet s'incline légèrement vers l'arrière relativement au sens de marche du fait du frottement sur la caténaire.

Bien que ce type de pantographe ne soit pas totalement abandonné, on préfère généralement les archets ayant une surface de contact dont la dimension mesurée dans le sens de la marche est assez importante, ces archets ayant alors la liberté de pivoter pour se plaquer contre la caténaire même si celle-ci monte ou descend par rapport à la voie. On peut aussi désirer utiliser des archets dont la surface de contact avec la caténaire reste parallèle au sol en toutes circonstances, c'est-à-dire n'ayant aucune possibilité d'oscillation indépendamment de la structure mobile.

On voit bien que le dispositif connu n'est adaptable ni à l'un ni à l'autre de ces deux types d'archets dont le premier est pourtant très répandu.

En effet, le fonctionnement du dispositif connu serait assez dangereux si l'archet était du premier type actuel mentionné ci-dessus car dans le cas où la caténaire se rapproche de la voie (entrée d'un tunnel par exemple), un archet de ce type s'incline vers l'avant. S'il rencontrait alors un obstacle sur la caténaire, il faudrait d'abord qu'il passe par la position verticale avant de pivoter vers l'arrière et enfin déclencher l'abaissement du pantographe.

D'autre part, le dispositif connu est incapable d'assurer le maintien rigide qui est nécessaire pour l'archet du second type mentionné ci-dessus.

On peut également noter que le dispositif connu est très complexe, et que son réglage est des plus délicats, compte tenu de l'incertitude pesant sur les forces de frottement du câble dans sa gaine.

D'ailleurs, l'effort à partir duquel le dispositif connu assure l'abaissement du pantographe n'est pas très bien fixé. Au contraire, l'effort s'opposant au basculement de l'archet augmente au fur et à mesure que ce dernier s'effectue, à cause des ressorts antagonistes qui sont de plus en plus déséquilibrés, et du ressort de rappel du câble, qui est de plus en plus tendu. En plus du réglage très difficile, il apparaît donc que lorsque l'archet rencontre un obstacle, le dispositif connu, au lieu de supprimer la sollicitation, la fait augmenter progressivement, ce qui peut être dangereux.

Suivant l'invention, le dispositif est caractérisé en ce qu'il comprend en outre un limiteur d'effort qui inhibe les moyens de déplacement de l'archet en-deçà d'un certain seuil d'effort subi par l'archet, et libère l'archet au-delà de ce seuil.

Le réglage de l'effort de déclenchement est très facile et très fiable puisqu'il suffit de régler le limiteur d'effort.

Une fois que le limiteur d'effort autorise le basculement de l'archet sous l'effet d'un effort anormal, l'effort à vaincre pour le basculement de l'archet est ensuite plus faible que celui qui était initialement opposé par le limiteur d'effort.

Le dispositif conforme à l'invention est adaptable à de très nombreux types d'archet et de pantographes.

Ainsi, en service normal, l'archet peut être maintenu rigidement par rapport à la structure mobile, si le type de pantographe l'exige.

Si par contre on désire qu'en service normal l'archet s'incline librement pour prendre une position perpendiculaire à la caténaire même lorsque celle-ci se rapproche ou s'éloigne de la voie, cela est possible également, moyennant une disposition avantageuse de l'invention, consistant en ce que l'archet soit monté en rotation libre autour d'une articulation par rapport aux moyens pour permettre le déplacement de l'archet.

On comprend donc que le pantographe conforme à l'invention remédie à tous les inconvénients énoncés plus haut en ce qui concerne le dispositif connu.

D'autres particularités et avantages de l'invention résulteront encore de la description ci-après.

Aux dessins annexés, donnés à titre d'exemples non limitatifs :

la figure 1 est une vue schématique d'un pantographe équipé du dispositif rabattable en cas d'effort frontal ;

la figure 2 est une vue en perspective du sommet de la structure mobile du pantographe de la figure 1 ;

les figures 3 et 4 sont des vues partielles en élévation latérale respectivement du sommet et de la base du pantographe de la figure 2 ;

la figure 5 est une vue en coupe du dispositif limiteur d'effort du pantographe de la figure 2 ;

la figure 6 est une vue schématique d'un pantographe en losange, rabattable en cas d'effort frontal ;

la figure 7 est une vue schématique en perspective du pantographe de la figure 6 ;

la figure 7A est une vue agrandie du détail VIIA de la figure 7 ;

la figure 8 est une vue de face partielle du sommet de la structure mobile de ce pantographe ;

la figure 9 est une vue schématique d'un troisième type de pantographe rabattable en cas d'effort frontal ;

la figure 10 est une vue schématique en perspective de la tête du pantographe ;

la figure 11 est une vue schématique d'un pantographe avec ressort abaisseur contrebalancé par pression de fluide ;

la figure 12 est une vue schématique d'un pantographe muni d'un ressort à pression de fluide.

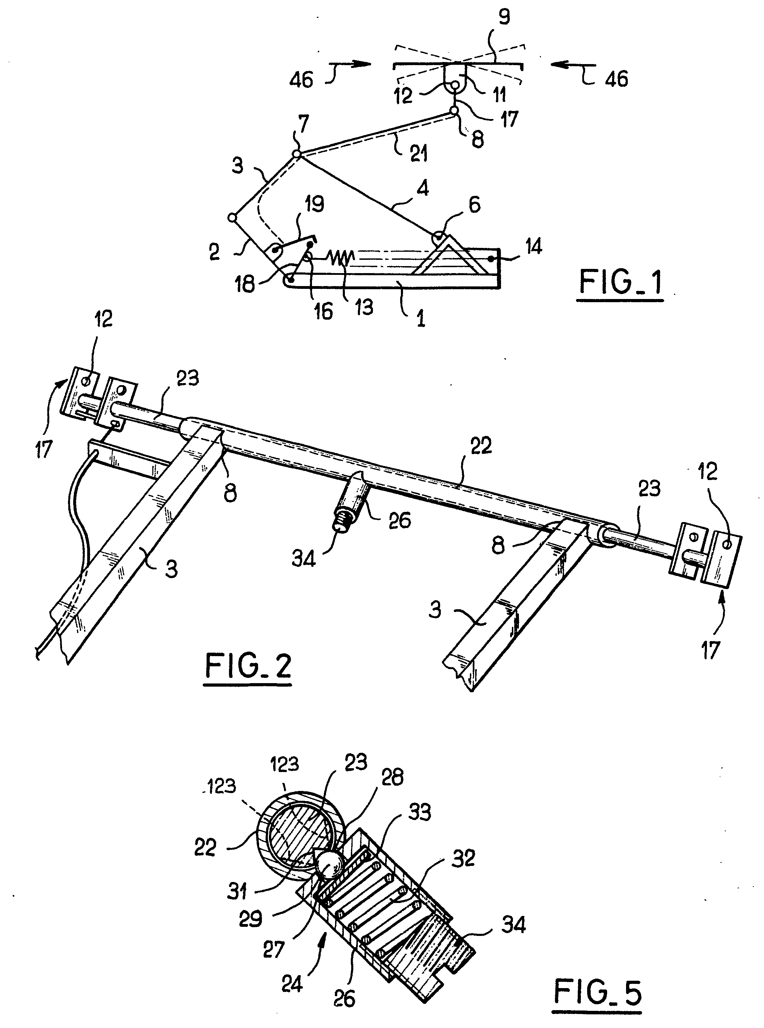

Comme le montre la figure 1, le pantographe comprend un châssis 1, un bras inférieur 2 dont une extrémité est articulée à ce châssis 1, et un bras supérieur 3 articulé à l'autre extrémité du bras inférieur 2.

Une bielle de couplage angulaire 4 qui relie un point fixe 6 du châssis 1 à un point 7 où le bras supérieur 3 est légèrement coudé vers le haut, donne au bras supérieur 3 une position angulaire déterminée pour chaque inclinaison du bras inférieur 2.

L'extrémité 8 du bras supérieur 3 opposée au bras inférieur 2 est munie d'un archet 9 destiné, en service, à être appuyé sous la caténaire (non représentée). L'archet 9 est porté par un système 11 pouvant par exemple comprendre des moyens élastiques de raideur élevée destinés à maintenir l'appui de l'archet 9 sur la caténaire malgré les petites perturbations qu'il peut rencontrer.

Dans le pantographe du genre représenté, destiné aux vitesses courantes, le système 11 est monté en rotation libre par rapport au bras supérieur 3 au moyen d'une articulation 12. C'est l'appui de l'archet 9 sur la caténaire qui assure la verticalité du système 11. Dans certains cas, un système de butées (non représenté) limite le tangage — ou balancement — de l'archet 9 entre deux positions limite représentées en pointillé à la figure 1.

Par ailleurs, un ressort élévateur 13, attaché au châssis 1 par son extrémité 14 et relié au bras inférieur 2 par son extrémité 16, tend en permanence à déployer la structure mobile du pantographe, c'est-à-dire à faire monter l'archet 9.

Conformément à l'invention, le bras supérieur 3 est relié à l'articulation 12 par des moyens pour permettre un déplacement de l'archet 9 par rapport au bras supérieur 3. Ces moyens comprennent un levier 17 reliant l'extrémité 8 du bras 3 à l'articulation 12 du système 11. En service normal, le levier 17 est approximativement perpendiculaire au châssis 1, mais il peut cependant prendre une légère inclinaison dans un sens ou dans l'autre selon le déploiement du pantographe.

D'autre part, le pantographe comprend des moyens pour neutraliser l'effet du ressort élévateur 13. Dans l'exemple représenté, l'extrémité 16 du ressort 13 est articulée à un levier tendeur 18 lui-même articulé au châssis 1, coaxialement au bras inférieur 2 mais indépendamment de ce dernier. L'extrémité libre du levier tendeur 18 est en prise dans un crochet 19 articulé au bras inférieur 2.

Des moyens de transmission 21 qui seront décrits plus en détail plus loin relient le levier 17 au crochet 19 de manière à dégager le crochet 19 du levier tendeur 18 quand le levier 17 s'écarte de sa position de service normal.

Cette structure va maintenant être décrite plus en détail en référence aux figures 2 à 5.

Il est d'abord à noter que dans les réalisations pratiques, certains éléments de la structure mobile du pantographe sont doubles. Dans ce cas, le pantographe comprend notamment un bras inférieur 2, deux bras supérieurs 3, deux ressorts 13 et deux leviers 17 montés en parallèle.

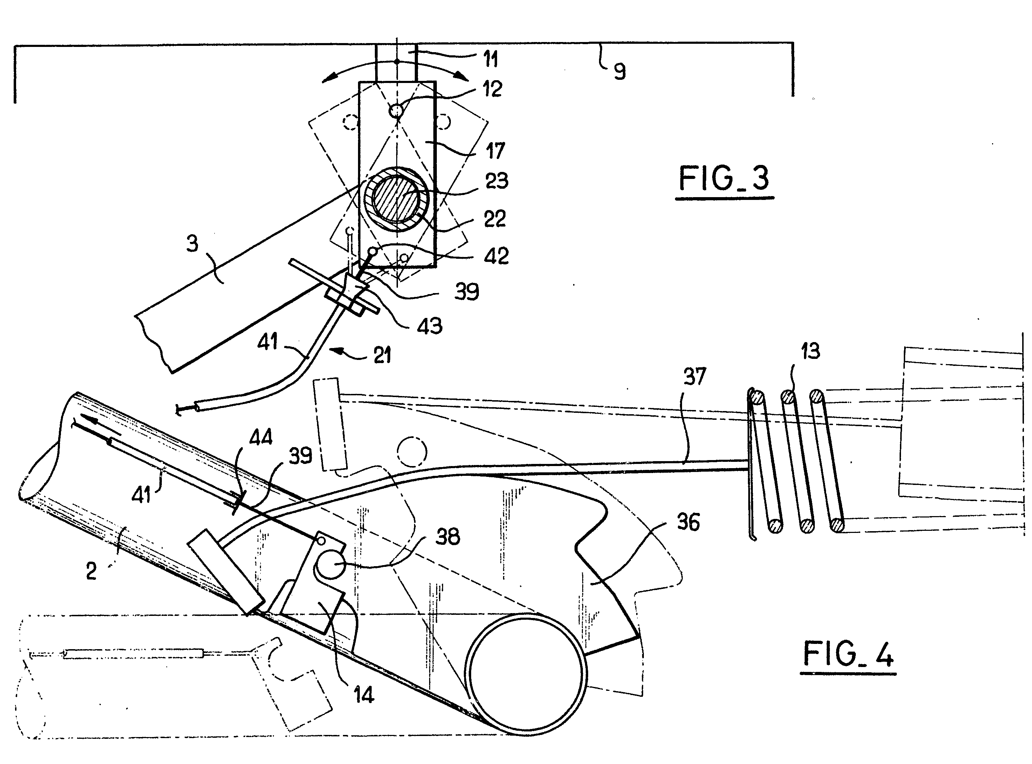

Comme le montrent les figures 2 et 3, l'extrémité 8 des deux bras supérieurs 3 sont soudés à un tube transversal 22 dans ?l est monté en rotation un axe 23 qui porte rigidement l'un des leviers 17 de chaque côté du tube 22. Les leviers 17 sont réalisés sous forme de chapes entre les bras desquelles sont montés en rotation libre les systèmes 11 (non représentés).

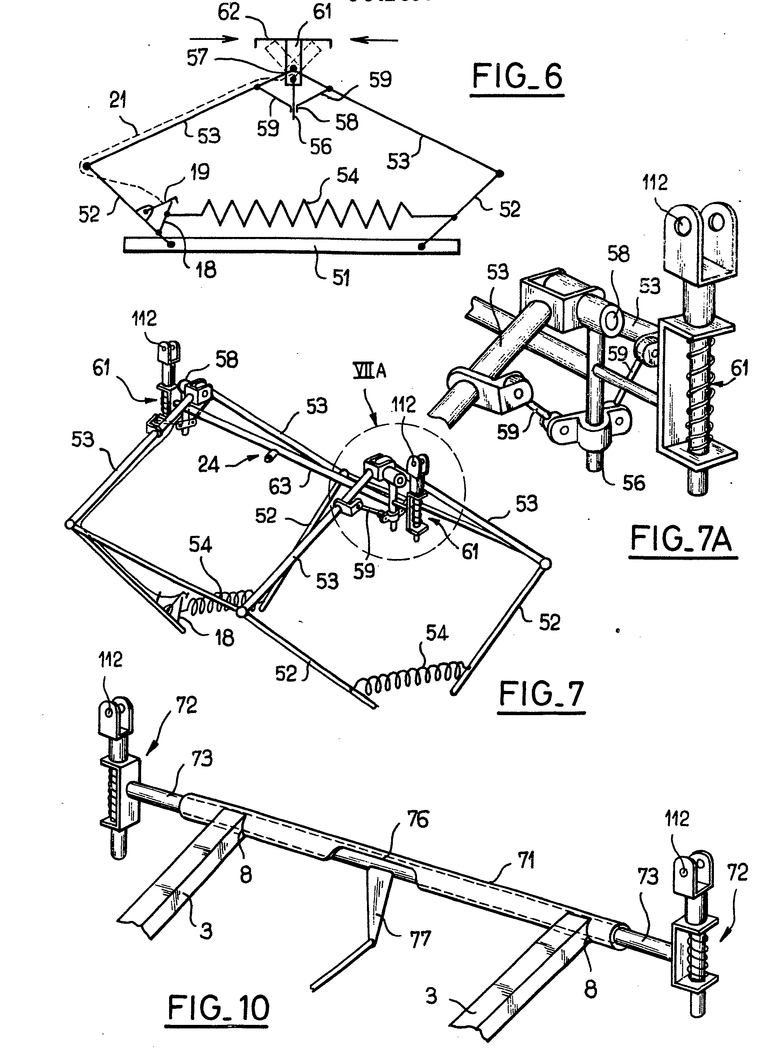

L'axe 23 est verrouillé sur le tube 22 au moyen d'un dispositif limiteur d'effort 24. Ce dispositif 24, représenté en détail à la figure 5, comprend un cylindre 26 dont le fond, percé d'une lumière 27, est soudé en face d'une lumière correspondante 28 du tube 22. Une bille 29, montée dans les lumières 27 et 28, est engagée dans un évidement conique 31 ménagé dans l'axe 23 au droit des lumières 27 et 28.

La bille 29 est appliquée dans l'évidement conique 31 sous l'effet d'un ressort hélicoïdal presseur 32, et d'une rondelle d'appui 33. A son autre extrémité, le ressort 32 est appuyé contre un culot 34 réglable par vissage dans le cylindre 26.

A la base de l'un des bras inférieurs 2 du pantographe (figure 4), le levier tendeur 18 de la figure 1 est remplacé par une came 36 montée en rotation libre sur le châssis 1 selon le même axe que les bras inférieurs 2.

A la came 36 est fixée l'une des extrémités d'une élingue 37 accrochée par son autre extrémité à l'un des ressorts élévateurs 13. Du fait du profil de la came 36, l'élingue 37, plus ou moins enroulée sur la came 36 selon l'orientation de cette dernière, transmet l'effort du ressort 13 à la came 36 selon un bras de levier d'autant plus court que le ressort 13 est étiré.

En service normal, le crochet articulé 14 du bras inférieur 2 est en prise avec un tenon 38 de la came 36 et de ce fait, en rotation cette came 36 et le bras inférieur 2.

Comme le montrent les figures 2, 3 et 4, les moyens de transmission entre le levier 17 et le crochet 14 comprennent un câble 39 monté à coulisse dans une gaine 41 passant le long des bras 2 et 3.

L'une des extrémités du câble 39 est fixée de façon articulée en un point 42 du levier 17 tel que l'axe du tube 22 soit sensiblement dans le prolongement de cette extrémité du câble 39 quand celui-ci est au repos. Ainsi, quand le levier 17 bascule, le déplacement du point 42 est perpendiculaire à la direction initiale du câble 39, et le câble 39 travaille donc en traction quel que soit le sens de pivotement du levier 17. La gaine 41 est terminée par un entonnoir 43 fixé au bras supérieur 3, et prévenant l'usure par frottement du câble 39 compte tenu de ces conditions de fonctionnement assez particulières.

L'autre extrémité du câble 39 est fixée de façon articulée au crochet 14 alors que l'extrémité correspondante de la gaine 41 est en appui contre une butée 44 fixée au bras inférieur 2.

Comme le montre la figure 2, un seul des leviers 17 est relié à un câble 39, et comme on l'a dit plus haut, un seul des bras 2 est associé à une came 36. L'autre bras 2 comporte une came analogue qui lui est fixée rigidement.

Le pantographe décrit ci-dessus fonctionne de la façon suivante :

En service normal, l'axe 23 est rendu solidaire du tube 22 par le dispositif limiteur d'effort 24. Les leviers 17 ont donc une position déterminée par rapport aux bras supérieurs 3.

Quand l'archet 9 est soumis à un effort important dans le sens de l'une des flèches 46 de la figure 1, la bille 29 se rétracte dans le cylindre 26, et l'axe 23 et les leviers 17 pivotent par rapport au tube 22 et aux bras supérieurs 3. Les leviers 17 et le câble 39 prennent l'une de leurs deux positions représentées en trait mixte à la figure 3, selon le sens de l'effort sur l'archet 9. Quelle que soit cette position, le câble 39 coulisse dans la gaine 41 vers le haut du pantographe, et le crochet 14 se dégage du tenon 38. La came 36, désolidarisée du bras inférieur 2, pivote instantanément dans le sens de la détente du ressort 13, et prend la position représentée en trait mixte à la figure 4. Le pantographe se replie par gravité, comme représenté également en trait mixte à la figure 4, en ce qui concerne le bras 2.

Cependant, comme un seul des ressorts 13 a été ainsi neutralisé, l'autre ressort 13 limite la vitesse de chute de la structure mobile du pantographe.

Le réglage du seuil d'effort de déclenchement est particulièrement aisé à effectuer par vissage du culot 34 dans le cylindre 26 du limiteur d'effort 24. Le déclenchement n'occasionne aucun dommage au pantographe qui, une fois la came 36 raccrochée au bras inférieur 2 qu'elle équipe, peut aussitôt être remis en service.

L'invention s'applique également aux pantographes dits « en losange », c'est-à-dire aux pantographes dans lesquels deux bras inférieurs et deux bras supérieurs montés symétriquement donnent à l'archet un mouvement perpendiculaire au châssis.

Comme le montre la figure 6, le pantographe en losange comporte deux bras inférieurs 52 articulés à un châssis 51 d'une part et à deux bras supérieurs 53 d'autre part. Les deux bras 53 sont reliés entre eux par leur extrémité opposée aux bras 52 et chaque paire de bras 52 et 53 est montée symétriquement à l'autre paire de manière analogue aux côtés d'un losange.

Des moyens non représentés donnent aux deux bras 52 une inclinaison symétrique par rapport au châssis 51.

Un ressort élévateur 54 relié à l'un des bras 52 par chacune de ses extrémités, tend en permanence à déployer la structure mobile du pantographe vers le haut. L'un des bras 52 est relié au ressort 54 par un système à levier tendeur 18 et crochet 19 analogue à celui de la figure 1.

Une tige 56, articulée librement selon l'axe 57 reliant les deux bras supérieurs 53, est maintenue sensiblement perpendiculaire au châssis 51 par une noix 58 reliée de façon symétrique à chacun des bras 53 par deux biellettes articulées 59.

Un système 61, analogue au système 11 de la figure 1, relie l'archet 62 à la tige 56. L'archet 62 est porté par les systèmes 61 au moyen de rotules (dont seul l'emplacement est représenté) 112 destinées à permettre à l'archet 62 de se plaquer librement contre la caténaire, mais aussi d'avoir une certaine inclinaison de roulis par différence de compression des ressorts des systèmes 61. En service normal, le système 61 est parallèle à la tige 56, mais au-delà d'un certain seuil d'effort qui lui est appliqué, il peut pivoter par rapport à la tige 56 selon l'une des deux positions représentées en pointillé. Enfin, les moyens de transmission 21, analogues à ceux de la figure 1, relient le système 61 au crochet 19.

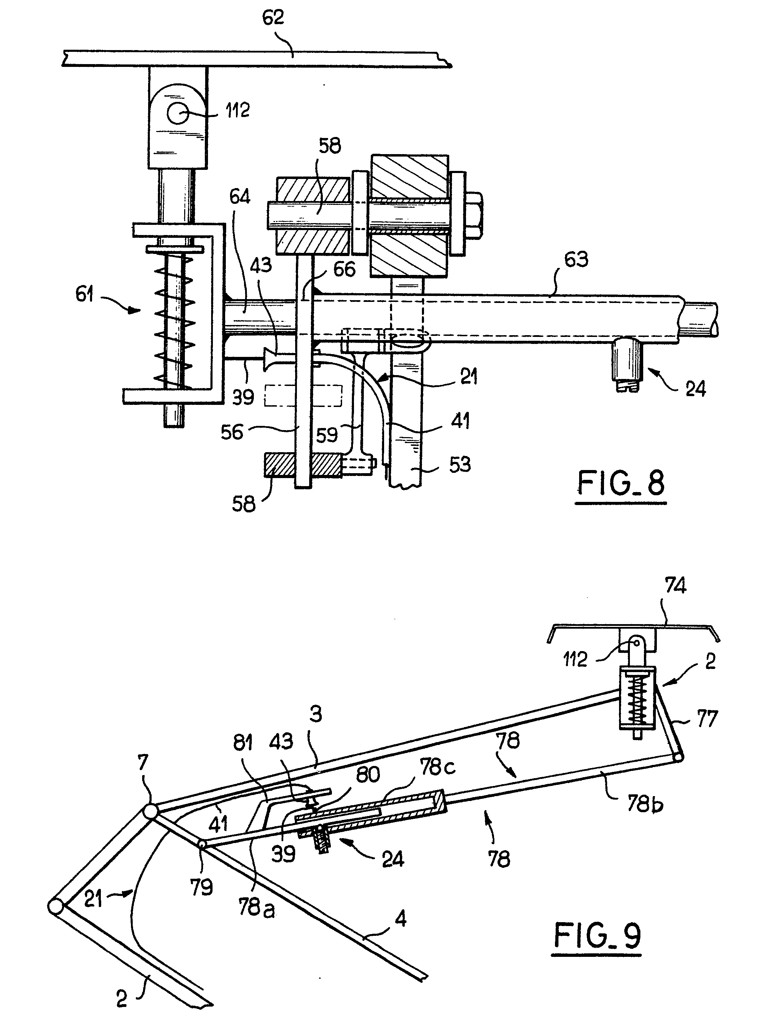

Cette réalisation va maintenant être décrite plus en détail en référence aux figures 7 et 8.

Comme le montre la figure 7, la structure mobile du pantographe en losange est avantageusement doublée, comme dans le cas de figures 2 à 5. Parmi les ressorts 54, seul l'un d'eux est équipé des dispositions conformes à l'invention qui sont analogues à celles des figures 1 à 5 en ce qui concerne les ressorts 54, de sorte que seule la partie supérieure du pantographe va être maintenant décrite en détail.

Les deux tiges 56 sont reliées par un tube 63 transversal au pantographe passant entre chaque paire de bras supérieurs 53, d'un même losange. Le tube 63 donnant une rigidité suffisante à la partie supérieure du pantographe, les axes 58 de chaque losange ne sont pas reliés entre eux.

Les systèmes élastiques 61 sont également reliés entre eux, par un axe 64, monté en rotation dans le tube 63 et dans des orifices 66 ménagés à chacune de ses extrémités dans les tiges 56. Chaque extrémité de l'axe 64 dépasse du tube 63 et un système 61 est soudé à chacune de ces extrémités.

L'axe 64 est partiellement lié en rotation au tube 63 au moyen d'un limiteur d'effort 24 tout à fait analogue à celui de la figure 5.

Les moyens de transmission comprennent également un câble 39 monté à coulisse dans une gaine 41. L'extrémité du câble 39 traverse la tige 56 et l'entonnoir 43 fixé à celle-ci juste au-dessous de l'axe 64, et est attachée au système 61 en un point situé en face de l'entonnoir 43 en position de service normal du système 61.

La gaine 41, dont l'extrémité est en butée contre la tige 56, est assujettie le long de la paire de bras 52 et 53 qui porte le crochet 19.

Cette réalisation fonctionne de la façon suivante :

En service normal, le limiteur d'effort 24 assure la verticalité des systèmes 61.

Si par contre un effort anormal s'exerce sur l'archet 62, le limiteur d'effort 24 permet la rotation de l'axe 64 et des systèmes 61 par rapport au tube 63.

Ce pivotement est à l'origine d'une traction sur le câble 39 qui dégage le crochet 19 du levier 18 et permet la détente du ressort 54.

Le pantographe se replie sur ses butées, sans brusquerie puisque l'un des ressorts 54 est encore en traction.

Dans certaines réalisations analogues à celles des figures 1 à 5, mais plus spécialement destinées aux véhicules très rapides, il est nécessaire d'assurer le positionnement de l'archet autrement que par son appui sur la caténaire.

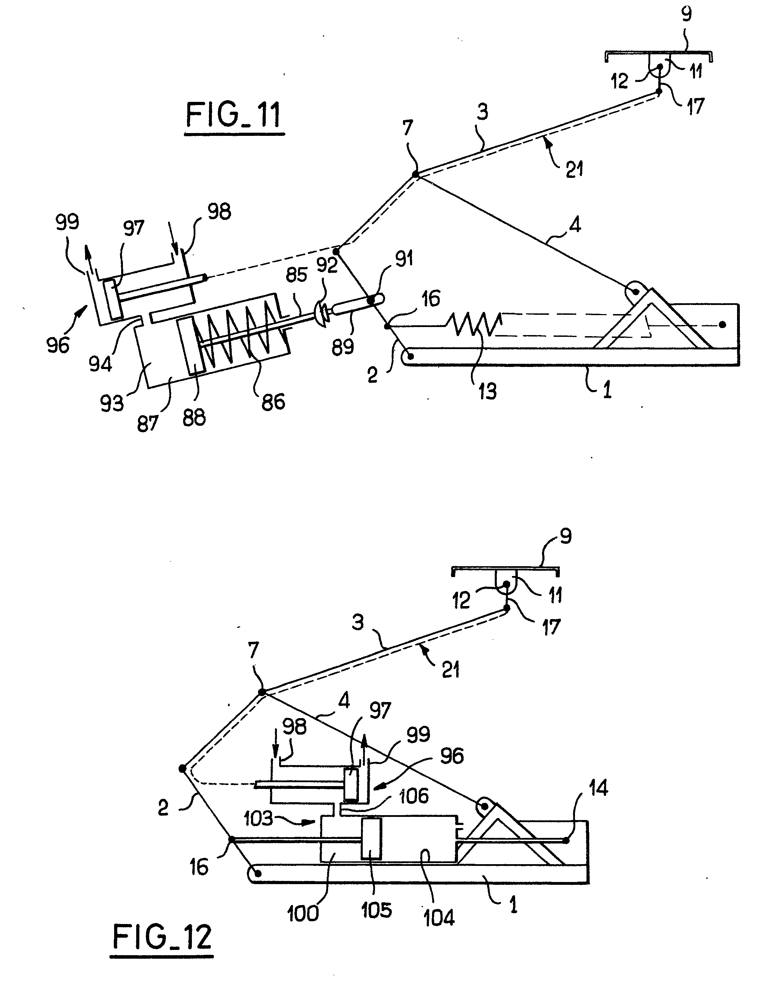

Le pantographe (figures 9 et 10) comprend, comme aux figures 2 à 4, un bras inférieur 2 et deux bras supérieurs 3, ainsi qu'une bielle de liaison angulaire 4 articulée au châssis (non représenté) et en un point 7 du bras 3.

Toute la partie inférieure du pantographe étant similaire à celle des figures 1 à 5, elle n'est ni décrite ni représentée.

Les bras 3 sont reliés par un tube 71 soudé transversalement à leur extrémité 8. Deux systèmes élastiques 72 analogues aux systèmes 61 des figures 6 à 8, sont fixés chacun à l'une des extrémités d'un axe 73 monté libre en rotation dans le tube 71, et portent ensemble un archet 74.

Le tube 71 présente une lumière 76 traversée par une tige 77 soudée au milieu de l'axe 73 et sensiblement dirigée à l'opposé de l'archet 74. Une biellette anti-balancement 78 est articulée à l'autre extrémité de la tige 77 d'une part et en un point 79 de la bielle 4 voisin du point 7 d'autre part.

La biellette anti-balancement 78 est réalisée en deux parties montées à coulisse, l'une 78a étant engagée dans l'embout tubulaire 78c de l'autre 78b.

En service normal, les deux parties 78a et 78b sont fixées l'une à l'autre au moyen d'un dispositif limiteur d'effort 24 analogue à celui de la figure 5, monté sur l'embout tubulaire 78c.

Les moyens de transmission 21 relient la biellette 78 à la partie inférieure du pantographe. Plus précisément, le câble 39 est fixé à l'embout tubulaire 78c en un point 80 tandis que l'extrémité correspondante de la gaine 41 est en butée contre une patte 81 fixée à la partie 78a et recourbée pour que la gaine 41 aboutisse en face du point 80 quand les parties 78a et 78b sont solidarisées par le limiteur 24.

Dans cette réalisation, tout effort sur l'archet 74 est transmis par la tige 77 à la bielle 78. Au-delà d'un certain seuil, le limiteur 24 permet le coulissement relatif des parties 78a et 78b, et le câble 39 commande le relâchement de l'un des ressorts du pantographe.

Le pantographe de la figure 11 ne sera décrit qu'en ce qui concerne ses différences par rapport à celui de la figure 1.

L'extrémité 16 du ressort 13 est attachée directement au bras 2, par l'intermédiaire d'une came.

Par ailleurs, le pantographe comprend un ressort abaisseur 86 monté dans un cylindre 87 entre le fond de ce cylindre et un piston 88 dont la tige 85, qui traverse axialement le ressort 86, porte une boutonnière 89 engagée à coulisse sur un tenon 91 du bras 2. En outre, la tige 85 comprend un isolateur électrique 92 destiné à permettre la fixation du cylindre 87 au véhicule sans court-circuit électrique.

Du côté du piston 88 opposé au ressort 86, le cylindre 87 comprend une chambre 93 pour un fluide sous pression, avec un orifice d'entrée 94.

L'orifice 94 est relié à une entrée centrale d'une valve 96 comprenant un tiroir 97 relié aux moyens de transmission isolants 21. La valve 96 comprend en outre une entrée de fond 98 pour le fluide sous pression, située du côté des moyens de transmission 21, et une sortie 99 à son autre fond.

Quand le véhicule est à l'arrêt, le ressort 86 maintient le pantographe replié à l'encontre de l'effet du ressort 13. Pour mettre en service le pantographe, on alimente l'entrée 98 de la valve 96, le tiroir 97 étant du côté de la sortie 99. Le fluide sous pression entre dans la chambre 93 et repousse le piston 88 en comprimant le ressort 86, ce qui permet au ressort 13 de déployer le pantographe. Les variations d'altitude de l'archet 9 sont permises pour la boutonnière 89 sans modifier la position du piston 88.

En cas d'effort anormal sur l'archet 9, les moyens de transmissions 21 ramènent le tiroir 97 vers l'entrée 98 et la chambre 93 est mise en communication avec la pression atmosphérique par la sortie 99. Le ressort 86 repousse le piston 88 et commande le repli du pantographe.

La réalisation de la figure 12 ne sera elle aussi décrite qu'en ce qui concerne ses différences par rapport à la réalisation de la figure 1.

Le ressort élévateur 13 est remplacé par un ressort à pression de fluide 103 monté directement entre le châssis 1 et le bras inférieur 2.

L'extrémité 14 du ressort 103 est reliée au cylindre 104 de ce ressort 103 tandis que son extrémité 16 est reliée à son piston 105. Un orifice 106 ménagé dans la chambre 100 du cylindre 104 située entre le piston 105 et l'extrémité 16 fait communiquer cette chambre 100 du cylindre 104 avec l'entrée centrale d'une valve 96 identique à celle de la figure 11, et dont le tiroir 97 est également relié aux moyens de transmission 21.

En service, le tiroir 97 est du côté de la sortie 99 et le fluide sous pression, en poussant le piston 105 vers l'extrémité 14 du ressort 103, tend à déployer le pantographe.

En cas d'effort anormal sur l'archet 9, le tiroir 97 est tiré vers l'entrée 98 de la valve 96 et le cylindre 104, relié à l'atmosphère, permet le repli du pantographe.

Comme on a pu le constater tout au long de la description, l'invention peut s'appliquer à des formes très variées de pantographes, sans en modifier la cinématique, même après qu'un effort anormal s'est exercé sur l'archet.

Le seuil d'effort est indépendant du sens de marche du véhicule et de l'altitude de l'archet, par rapport au châssis et le réglage de ce seuil d'effort est particulièrement simple. Après l'effort anormal, la remise en service du système est aisée, surtout dans les réalisations des figures 11 et 12 où il suffit de ramener le tiroir 97 vers la sortie 99 de la valve 96.

Bien entendu, l'invention n'est pas limitée aux exemples représentés, et de nombreux aménagements peuvent être apportés à ces exemples sans sortir du cadre de l'invention.

C'est ainsi que le limiteur d'effort peut être remplacé par une pièce de rupture, telle qu'une goupille calibrée, cisaillable sous l'effet d'un effort déterminé.

L'invention peut ainsi s'appliquer aux pantographes comprenant un moteur électrique pour abaisser la structure mobile à l'encontre de l'effet du ressort. Il suffirait que les moyens de transmission soient reliés à un contacteur commandant la mise en route de ce moteur.

Les différentes variantes de réalisation des moyens de déplacement de l'archet et de neutralisation de l'effet des ressorts peuvent se combiner entre elles de manières différentes de celles décrites et représentées.

Par ailleurs, l'invention est applicable à de très nombreux types de pantographes de cinématiques très variées.

Comme le montre la figure 5, on peut prévoir de chaque côté de l'évidement 31 un pan coupé 123. Ainsi, une fois que le seuil d'effort est dépassée et que la bille 29 est sortie de l'évidement 31, le ressort 32 peut à nouveau se détendre, aidant l'arbre 23 à tourner dans le tube 22 malgré les frottements. On évite ainsi que les frottements rendent indéfini le seuil d'effort pour le déclenchement, et on peut même faire des pans coupés 123 suffisamment marqués pour qu'après le déverrouillage, le ressort 32 fournisse un couple de rotation positif sur l'arbre 23, qui oblige l'archet à esquiver l'obstacle sans prendre appui sur ce dernier, et qui hâte l'abaissement de la structure mobile.

**Revendications**

1. Pantographe rabattable automatiquement en cas d'effort frontal anormal, ce pantographe comprenant un archet (9, 62, 74) monté au sommet d'une structure mobile (2, 3, 52, 53) articulée à un châssis (1, 51), au moins un ressort (13, 54, 103) élévateur de la structure mobile (2, 3, 52, 53), attaché à la structure mobile (2, 3, 52, 53) et au châssis (1, 51), des moyens (17, 22, 23, 24, 63, 64, 78a, 78b) pour permettre un déplacement de l'archet (9, 62, 74) indépendamment de la structure mobile (2, 3, 52, 53), des moyens (18, 19, 96) pour neutraliser le ressort élévateur (13, 54, 103), et des moyens de transmission (21) pour relier les moyens de déplacement de l'archet (9, 62, 74) aux moyens (18, 19, 96) pour neutraliser le ressort élévateur (13, 54, 103), caractérisé en ce que ce pantographe comprend un limiteur d'effort (24) qui inhibe les moyens de déplacement de l'archet en deçà d'un certain seuil d'effort subi par l'archet, et libère l'archet au-delà de ce seuil.

2. Pantographe conforme à la revendication 1, caractérisé en ce que l'archet (9, 62, 74) est monté en rotation libre autour d'une articulation (12) par rapport aux moyens pour permettre le déplacement de l'archet.

3. Pantographe conforme à l'une des revendications 1 ou 2 dans lequel les moyens de déplacement de l'archet comprennent au moins un levier (17, 61, 72) reliant l'archet (9, 74) à la structure mobile (2, 3, 52, 53), les moyens de transmission (21) étant reliés à ce levier (17, 61, 72), caractérisé, en ce que le levier (17, 61, 72) est rendu solidaire d'un axe (23, 64, 73) verrouillé en rotation sur la structure mobile (2, 3, 52, 53) par le limiteur d'effort (24).

4. Pantographe conforme à l'une des revendications 1 ou 2 dans lequel l'archet (74) est relié à une biellette anti-balancement (78), caractérisé en ce que cette biellette (78) comprend deux parties (78a, 78b) montées à coulisse l'une par rapport à l'autre et verrouillées au moyen du limiteur d'effort (24).

5. Pantographe conforme à l'une des revendications 1 à 4, caractérisé en ce que le limiteur d'effort est un verrou à bille (29) et ressort (32), des moyens (34) étant prévus pour permettre le réglage de la tension du ressort (32).

6. Pantographe conforme à la revendication 5, caractérisé en ce qu'en position de verrouillage la bille (29) est engagée dans un évidement (31) de la pièce à verrouiller (23), et en ce que de chaque côté de l'évidement (31) est aménagé un profil (123) destiné à permettre la détente progressive du ressort (32) après que la bille a quitté l'évidement (31).

7. Pantographe conforme à l'une des revendications 1 à 6, caractérisé en ce que les moyens pour neutraliser le ressort élévateur comprennent un crochet articulé (19) destiné à être en prise avec l'une des extrémités (16) du ressort élévateur (13, 54), les moyens de transmission (21) étant reliés à ce crochet (19).

8. Pantographe conforme à l'une des revendications 1 à 6, dans lequel le ressort élévateur comprend une chambre (100) de fluide sous pression, caractérisé en ce que les moyens pour neutraliser le ressort élévateur comprennent une valve (96) de mise à la pression atmosphérique de cette chambre (100).

9. Pantographe conforme à l'une des revendications 1 à 6, comprenant un moteur pour abaisser le pantographe à l'encontre de l'effet du ressort élévateur, caractérisé en ce que les moyens pour neutraliser le ressort élévateur comprennent des moyens pour mettre en service le moteur précité.

10. Pantographe conforme à l'une des revendications 1 à 9, comprenant deux ressorts élévateurs (13, 54) montés en parallèle, caractérisé en ce qu'un seul des ressorts (13, 54) élévateur est associé aux moyens (18, 19, 96) pour neutraliser son effet.

**Claims**

1. A retractable pantograph for automatic downward withdrawal in the event of an abnormal frontal load, comprising a current-collector bow (9, 62, 74) mounted at the top of a movable structure (2, 3, 52, 53) pivotally attached to a frame (1, 51), at least one spring (13, 54, 103) for lifting the movable structure (2, 3, 52, 53), said spring being attached to said structure (2, 3, 52, 53) and to said frame (1, 51), means (17, 22, 23, 24, 63, 64, 78a, 78b) for permitting displacement of the bow (9, 62, 74) independently of the movable structure (2, 3, 52, 53), means (18, 19, 96) for neutralizing the lifting spring (13, 54, 103), and transmission means (21) for coupling the bow-displacement means (9, 62, 74) to said means (18, 19, 96) for neutralizing the lifting spring (13, 54, 103), characterized in that said pantograph comprises a load limiter (24) which inhibits the bow-displacement means when the load applied to the bow is below a predetermined threshold value and which releases said bow above said threshold value.

2. A pantograph according to claim 1, characterized in that the bow (9, 62, 74) is mounted to rotate freely about a fulcrum (12) with repect to the means for permitting displacement of said bow.

3. A pantograph according to claim 1 or claim 2 in which the bow-displacement means comprise at least a lever (17, 61, 72) for coupling the bow (9, 74) to the movable structure (2, 3, 52, 53), the transmission means (21) being connected to said lever (17, 61, 72), characterized in that the lever (17, 61, 72) is rigidly fixed to a shaft (23, 64, 73) which is locked rotationally on the movable structure (2, 3, 52, 53) by means of the load limiter (24).

4. A pantograph according to claim 1 or claim 2 in which the bow (74) is connected to an anti-swing connecting-rod (78), characterized in that said connecting-rod (78) comprises two portions (78a, 78b) slidably mounted with respect to each other and locked in position by means of the load limiter (24).

5. A pantograph according to one of claims 1 to 4, characterized in that the load limiter is a latch of the type having a ball (29) and a spring (32), means (34) being provided for adjusting the tension of the spring (32).

6. A pantograph according to claim 5, characterized in that the ball (29) is engaged in the locking position within a recess (31) of the member to be locked (23) and in that there is formed on each side of the recess (31) a shaped surface (123) for permitting progressive expansion of the spring (32) after the ball has passed out of said recess (31).

7. A pantograph according to one of claims 1 to 6, characterized in that the means for neutralizing the lifting spring comprise a pivotally-mounted hook (19) engageable with one of the ends (16) of the lifting spring (13, 54), the transmission means (21) being connected to said hook (19).

8. A pantograph according to one of claims 1 to 6 in which the lifting spring comprises a chamber (100) for fluid under pressure, characterized in that the means for neutralizing the lifting spring comprise a valve (96) for connecting said chamber (100) to atmospheric pressure.

9. A pantograph according to one of claims 1 to 6 and comprising a motor for lowering the pantograph in opposition to the action of the lifting spring, characterized in that the means for neutralizing said lifting spring comprise means for putting said motor into service.

10. A pantograph according to one of claims 1 to 9 and comprising two lifting springs (13, 54) mounted in parallel, characterized in that only one of the lifting springs (13, 54) is associated with the means (18, 19, 96) for neutralizing the action of said spring.

**Ansprüche**

1. Pantographförmiger Stromabnehmer, der bei einer anomalen vorderseitigen Belastung automatisch zusammenlegbar ist, mit einem Bügel (9, 62, 74), der an der höchsten Stelle einer bewegbaren, an einem Chassis (1, 51) angelenkten Struktur (2, 3, 52, 53) montiert ist, wenigstens einer Feder (13, 54, 103) zum Anheben der beweglichen Struktur (2, 3, 52, 53), wobei die Feder an der bewegbaren Struktur (2, 3, 52, 53) und an dem Chassis (1, 51) gebunden ist, Mitteln (17, 22, 23, 24, 63, 64, 78a, 78b), die eine Bewegung des Bügels (9, 62, 74) unabhängig von der bewegbaren Struktur (2, 3, 52, 53) ermöglichen, Mitteln (18, 19, 96) zum Unwirksammachen der Hubfeder (13, 54, 103) und mit Übertragungsmitteln (21) zur Verbindung der Mittel für die Bewegung des Bügels (9, 62, 74) mit den Mitteln (18, 19, 96) zum Unwirksammachen der Hubfeder (13, 54, 103), dadurch gekennzeichnet, daß der Stromabnehmer einen Belastungsbegrenzer (24) umfaßt, der unterhalb einer bestimmten Schwelle einer auf den Bügel einwirkenden Belastung die Mittel zur Bewegung des Bügels sperrt und oberhalb dieser Schwelle den Bügel freigibt.

2. Stromabnehmer nach Anspruch 1, dadurch gekennzeichnet, daß der Bügel (9, 62, 74) um ein Gelenk (12) frei drehbar in bezug auf die Mittel, die die Bewegung des Bügels ermöglichen, gelagert ist.

3. Stromabnehmer nach Anspruch 1 oder 2, bei dem die Mittel zur Bewegung des Bügels wenigstens einen Hebel (17, 61, 72) umfassen, der den Bügel (9, 74) mit der bewegbaren Struktur (2, 3, 52, 53) verbindet, wobei die Übertragungsmittel (21) mit diesem Hebel (17, 61, 72) verbunden sind, dadurch gekennzeichnet, daß der Hebel (17, 61, 72) fest verbunden ist mit einer Achse (23, 64, 73), die durch den Belastungsbegrenzer (24) drehfest an der bewegbaren Struktur (2, 3, 52, 53) verriegelt ist.

4. Stromabnehmer nach Anspruch 1 oder 2, bei dem der Bügel (74) mit einem schwingungshemmenden Pleuel (78) verbunden ist, dadurch gekennzeichnet, daß dieses Pleuel (78) zwei gegenseitig verschiebbare Teile (78a, 78b) enthält, die durch den Belastungsbegrenzer (24) miteinander verriegelt sind.

5. Stromabnehmer nach einem der Ansprüche 1 bis 4, dadurch gekennzeichnet, daß der Belastungsbegrenzer eine Sperre mit einer Kugel (29) und einer Feder (32) ist und Mittel (34) vorgesehen sind, um die Einstellung der Spannung der Feder (32) zu ermöglichen.

6. Stromabnehmer nach Anspruch 5, dadurch gekennzeichnet, daß in der Verriegelungsstellung die Kugel (29) in eine Ausnehmung (31) des zu verriegelnden Teiles (23) eingreift und daß auf jeder Seite der Ausnehmung (31) ein Profil (123) angeordnet ist, das dazu bestimmt ist, die progressive Entspannung der Feder (32) zu ermöglichen, nachdem die Kugel die Ausnehmung (31) verlassen hat.

7. Stromabnehmer nach einem der Ansprüche 1 bis 6, dadurch gekennzeichnet, daß die Mittel zum Unwirksammachen der Hubfeder einen angelenkten Haken (19) umfassen, der dazu bestimmt ist, mit einem der Enden (16) der Hubfeder (13, 54) in Eingriff zu sein, wobei die Übertragungsmittel (21) mit diesem Haken (19) verbunden sind.

8. Stromabnehmer nach einem der Ansprüche 1 bis 6, bei dem die Hubfeder eine Druckfluidkammer (100) umfaßt, dadurch gekennzeichnet, daß die Mittel zum Unwirksammachen der Hubfeder ein Ventil (96) umfassen, das diese Kammer (100) mit dem Atmosphärendruck in Verbindung bringen kann.

9. Stromabnehmer nach einem der Ansprüche 1 bis 6, mit einem Motor zum Absenken des Stromabnehmers entgegen der Wirkung der Hubfeder, dadurch gekennzeichnet, daß die Mittel zum Unwirksammachen der Hubfeder Mittel zum Inbetriebsetzen des genannten Motors umfassen.

10. Stromabnehmer nach einem der Ansprüche 1 bis 9, mit zwei Hubfedern (13, 54), die parallel angeordnet sind, dadurch gekennzeichnet, daß eine einzige der Hubfedern (13, 54) den Mitteln (18, 19, 96) zum Unterdrücken ihrer Wirkung zugeordnet ist.

**FIG_1**

**FIG_2**

**FIG_5**

FIG_3

FIG_4

FIG_6

FIG_7A

FIG_7

FIG_10

FIG_8

FIG_9

FIG_11

FIG_12